# EUROPÄISCHE PATENTANMELDUNG

(11) **EP 2 405 563 A2**
(43) Veröffentlichungstag der Anmeldung: **11.01.2012**
(21) Anmeldenummer: 11005530.8
(22) Anmeldetag: 06.07.2011
(51) Int. Cl.: H02M 3/156, H02M 3/335

(54) **Verfahren zum Betreiben einer Gleichspannungswandler-Schaltungsanordnung**

(30) Priorität: 10.07.2010 DE 102010026794
(71) Anmelder: Diehl AKO Stiftung & Co. KG, 88239 Wangen (DE)
(72) Erfinder: Schill, Christoph, 88213 Ravensburg (DE)
(74) Vertreter: Diehl Patentabteilung

(57) **Zusammenfassung**

Eine Gleichspannungswandler-Schaltungsanordnung umfasst eine Gleichrichteranordnung (D, C) und auf ihrer Eingangsseite eine Induktivität (Lp) und wenigstens einen Leistungsschalter (T) zum Schalten der Induktivität (Lp). Bei der Regelung dieser Schaltungsanordnung wird eine Ausschaltzeit (toff) des Leistungsschalters (T) in Abhängigkeit von der Ausgangsleistung der Schaltungsanordnung variabel verändert und erfolgt ein Einschalten des Leistungsschalters (T) jeweils im Bereich eines Minimums einer Spannungskurve (Vt) am Leistungsschalter (T), um die Schaltverluste zu minimieren und einen hohen Wirkungsgrad zu erzielen.

## Beschreibung

Die vorliegende Erfindung betrifft ein Verfahren zum Betreiben einer Gleichspannungswandler-Schaltungsanordnung wie beispielsweise eines Sperrwandlers, eines Aufwärtswandlers oder eines Abwärtswandlers.

In Gleichspannungswandler-Schaltungsanordnungen (auch kurz als Schaltwandler bezeichnet) entstehen im Allgemeinen Verluste beim Schaltvorgang durch Umladen der parasitären Streukapazitäten in Drosseln oder Transformatoren und in Leistungshalbleitern. Insbesondere bei Schaltwandlern, die an sehr hohen Eingangsspannungen arbeiten, können diese Verluste groß werden, da sie proportional zum Quadrat der anliegenden Spannungen sind.

Es gibt daher ein Bestreben, diese Schaltverluste durch geeignete Maßnahmen möglichst gering zu halten.

Ein bekanntes Standardverfahren zur Regelung von Schaltwandlern ist die Pulsweitenmodulation bei fester Schaltfrequenz. Hierbei wird die Ausgangsleistung reduziert, indem die Pulsbreite des Leistungsschalters verringert wird. Dabei sinken der Strom im Leistungsschalter und schließlich auch die übertragene Leistung. Die Anzahl der Schaltvorgänge bleibt bei diesem Verfahren jedoch gleich, weshalb die Schaltverluste bei Teillast überproportional groß sind.

Ein bekannter Ansatz zur Reduktion der Schaltverluste ist auch das so genannten Variable Off Time ― Verfahren. Bei diesem Regelungsverfahren wird bei Teillast der Spitzenstrom im Leistungsschalter konstant belassen und die Leistungsreduktion erfolgt dadurch, dass die Schaltfrequenz abgesenkt, d.h. die Ausschaltzeit des Leistungsschalters (Off Time) erhöht wird. Die Anzahl der Schaltvorgänge im Schaltwandler wird auf diese Weise auf das jeweils nötige Minimum reduziert. Damit sinken die Schaltverluste proportional zur Ausgangsleistung, weshalb der Wirkungsgrad auch bei Teillast über einen weiten Bereich konstant bleibt. Allerdings sind die Schaltverluste bei Volllast unverändert hoch, da hier die Anzahl der Schaltvorgänge nicht reduziert werden kann.

Ein Schaltwandler, bei dem die Frequenz und/oder das Tastverhältnis des Taktsignals zum Ein- und Ausschalten des Leistungsschalters verändert werden, um die Ausgangsleistung der Schaltungsanordnung zu regeln, ist zum Beispiel in der DE 44 10 738 A1 beschrieben.

Ein weiterer bekannter Ansatz zur Reduzierung von Schaltverlusten in Schaltwandlern besteht darin, den Leistungsschalter exakt in dem Moment einzuschalten, wenn die Spannung an diesem Leistungsschalter zu Null wird (so genanntes resonantes Schalten). Die Streukapazitäten der Schaltungsanordnung haben zu diesem Zeitpunkt keine Ladung, weshalb auch keine Verluste entstehen. Bei den gängigen Schaltwandlerkonzepten, die nach diesem Regelungsverfahren arbeiten, erhöht sich die Schaltfrequenz bei Teillast zunächst. Da das Einschalten des Leistungsschalters aber jeweils zum Zeitpunkt des Nulldurchgangs der Spannung erfolgt, entstehen durch die erhöhte Schaltfrequenz keine Mehrverluste. Schaltwandler, die mit einem solchen Regelungsverfahren betrieben werden, sind beispielsweise in der DE 42 28 640 B4 und der DE 101 24 411 A1 offenbart.

Aufgrund neuer Normvorschriften für Photovoltaikanlagen muss die interne Stromversorgung von Solarwechselrichtern vom Betrieb am Netz auf Betrieb am Solargenerator umgestellt werden. Zu diesem Zweck muss ein Weitbereichs-Schaltwandler bereitgestellt werden, der mit hohen Eingangsspannungen bis 1.000 V arbeitet und einen hohen Wirkungsgrad besitzt.

Speziell bei Sperrwandlern mit sehr hoher Eingangsspannung muss allerdings die Rückschlagspannung beim Entladen des Wandlertransformators auf einen relativ kleinen Wert begrenzt werden, um den Leistungsschalter nicht durch Überspannung zu zerstören. Dies hat zur Folge, dass nach Entladung des Sperrwandlertransformators die Spannung am Leistungsschalter nicht bis auf Null herunter schwingen kann. Ein perfektes Nulldurchgangsschalten ist somit in diesem Anwendungsfall nicht möglich. Beim Einschalten des Leistungsschalters treten daher immer Schaltverluste auf; eine Frequenzerhöhung zum Beispiel bei Teillast ist damit ungünstig.

Es ist eine Aufgabe der vorliegenden Erfindung, ein verbessertes Verfahren zum Betreiben einer Gleichspannungswandler-Schaltungsanordnung zu schaffen, welche auch bei Gleichspannungswandler-Schaltungsanordnungen, bei denen ein Nulldurchgangsschalten nicht oder nicht in jedem Betriebszustand möglich ist, die Schaltverluste reduzieren bzw. minimieren kann.

Diese Aufgabe wird gelöst durch ein Verfahren zum Betreiben einer Gleichspannungswandler-Schaltungsanordnung mit den Merkmalen des Anspruchs 1. Vorteilhafte Ausgestaltungen, Weiterbildungen und Anwendungen der Erfindung sind Gegenstand der abhängigen Ansprüche.

Bei dem Verfahren zum Betreiben einer Gleichspannungswandler-Schaltungsanordnung, welche eine Gleichrichteranordnung und auf ihrer Eingangsseite eine Induktivität und wenigstens einen Leistungsschalter zum Schalten der Induktivität aufweist, wird eine Ausschaltzeit des Leistungsschalters in Abhängigkeit von der Ausgangsleistung der Schaltungsanordnung variabel verändert. Dabei erfolgt gemäß der Erfindung ein Einschalten des Leistungsschalters jeweils im Bereich eines Minimums einer Spannungskurve am Leistungsschalter.

Gemäß dem erfindungsgemäßen Verfahren werden die Schaltverluste der Gleichspannungswandler-Schaltungsanordnung minimiert, indem das Variable Off Time ― Verfahren in Kombination mit einem Einschalten des Leistungsschalters im Bereich eines Spannungsminimums am Leistungsschalter verwendet wird. Dieses Verfahren ist in besonders vorteilhafter Weise bei Schaltwandlern einsetzbar, bei denen ein Nulldurchgangsschalten nicht oder nicht in jedem Betriebszustand möglich ist. Es eignet sich daher in vorteilhafter Weise zum Beispiel im Fall von Photovoltaikanlagen, in denen Schaltwandler mit hohen Eingangsspannungen arbeiten.

Mit dem erfindungsgemäßen Verfahren kann ein hoher Wirkungsgrad für die Gleichspannungswandler-Schaltungsanordnung erzielt werden, indem die Ausgangsleistung mittels variabler Ausschaltzeitdauer (d.h. Frequenzänderung) des Leistungsschalters geregelt wird und gleichzeitig das Einschalten des Leistungsschalters zu einem optimalen Zeitpunkt erfolgt.

Das Verfahren kann beispielsweise durch einfaches Modifizieren des Variable Off Time ― Verfahrens realisiert werden, indem der herkömmlich für das Variable Off Time ― Verfahren eingesetzten Steuereinrichtung eine externe Beschaltung hinzugefügt wird, um das gewünschte Schalten des Leistungsschalters im Bereich eines Spannungsminimums zu erreichen. Alternativ kann das Verfahren natürlich auch durch eine speziell angepasste Steuereinrichtung realisiert werden. Eine solche speziell angepasste Steuereinrichtung kann zum Beispiel derart ausgestaltet sein, dass sie den Spannungsverlauf am Leistungsschalter direkt oder indirekt erfasst und das Variable Off Time ― Verfahren unter Berücksichtigung dieser Spannungserfassung ausführt.

Das Variable Off Time ― Verfahren wird erfindungsgemäß so modifiziert, dass das Einschalten des Leistungsschalters nur noch zu den Zeitpunkten erfolgt, zu denen die Spannung am Leistungsschalter (nahezu) minimal ist. Um trotz der auf diese Weise diskreten Einschaltzeitpunkte jede beliebige Ausgangsleistung liefern zu können, kann ggf. zwischen benachbarten Einschaltzeitpunkten hin-und hergeschaltet werden, sodass sich im Mittel die gewünschte Ausgangsleistung ergibt.

Das Einschalten des Leistungsschalters "im Bereich eines Minimums" einer Spannungskurve am Leistungsschalter soll nicht auf ein Einschalten exakt zum Spannungsminimum begrenzt sein; es kann auch in der Nähe des Spannungsminimums erfolgen.

Die "Induktivität" kann je nach Aufbau und Anwendung der Gleichspannungswandler-Schaltungsanordnung zum Beispiel eine Drossel oder eine Primärwicklung eines Transformators sein.

In einer Ausgestaltung der Erfindung wird der Einschaltzeitpunkt des Leistungsschalters als Schnittpunkt zwischen einer monoton ansteigenden Rampenspannungskurve und einer modifizierten Feedback-Spannungskurve bestimmt, wobei die modifizierte Feedback-Spannungskurve durch Addieren der Spannungskurve am Leistungsschalter zu einer gemittelten Feedback-Spannung erzeugt wird, wobei diese gemittelte Feedback-Spannung durch eine Mittelung einer Differenz zwischen einer Ausgangsspannung der Schaltungsanordnung und einem Sollwert der Ausgangsspannung der Schaltungsanordnung bestimmt wird.

In einer alternativen Ausgestaltung der Erfindung wird der Einschaltzeitpunkt des Leistungsschalters als Schnittpunkt zwischen einer modifizierten Rampenspannungskurve und einer gemittelten Feedback-Spannung bestimmt, wobei die modifizierte Rampenspannungskurve durch Subtrahieren der Spannungskurve am Leistungsschalter von einer monoton ansteigenden Rampenspannungskurve erzeugt wird, wobei diese gemittelte Feedback-Spannung durch eine Mittelung einer Differenz zwischen einer Ausgangsspannung der Schaltungsanordnung und einem Sollwert der Ausgangsspannung der Schaltungsanordnung bestimmt wird.

Das erfindungsgemäße Verfahren kann somit zum Beispiel bei einem nach dem Variable Off Time ― Verfahren arbeitenden Schaltwandler auf einfache Weise durch Addition der Spannung am Leistungsschalter auf den Regelkreis bzw. die gemittelte Feedback-Spannung oder durch Subtraktion der Spannung am Leistungsschalter von der Rampenspannung ausgeführt werden.

Eine herkömmliche Methode zum Einschalten eines Leistungsschalters zum Spannungsminimum ist es, den Nulldurchgang der Schwingung zu erfassen und dann nach einer Zeitverzögerung von 1/4 Periode einzuschalten. Diese Zeitverzögerung muss dabei aber individuell an die in der Schaltungsanordnung auftretende Schwingfrequenz angepasst werden. Bei dem erfindungsgemäßen Verfahren erfolgt nach den beiden alternativen Ausgestaltungen das Einschalten des Leistungsschalters jedoch automatisch zum passenden Zeitpunkt (im Bereich des Spannungsminimums) unabhängig von der Frequenz der Schwingung.

Die "monoton ansteigende" Rampenspannungskurve muss monoton ansteigen, der Anstieg muss aber nicht notwendigerweise stetig oder gar linear erfolgen. Zum Beispiel kann der Anstieg auch zeitweise angehalten werden, sodass die Rampenspannung für eine gewisse Zeit auf einem konstanten Wert verharrt. Ferner kann die Rampenspannung zum Beispiel bei extrem niedriger Ausgangsleistung auch nach Erreichen eines Maximalwertes auf diesem verbleiben, bis die absinkende modifizierte Feedback-Spannung diese Rampenspannung erreicht.

Der Beginn (des Ansteigens) der Rampenspannung kann zu verschiedenen Zeitpunkten erfolgen. In einer möglichen Ausgestaltung der Erfindung beginnt die Rampenspannungskurve beispielsweise zu einem Ausschaltzeitpunkt des Leistungsschalters. Durch die Wahl des Startzeitpunkts der Rampenspannungskurve kann beeinflusst werden, wann der Leistungsschalter frühestens eingeschaltet wird. Mit anderen Worten kann auf diese Weise die Taktfrequenz nach oben begrenzt werden.

In einer weiteren Ausgestaltung der Erfindung kann die gemittelte Feedback-Spannung und/oder die Rampenspannungskurve auf einen vorgegebenen Spannungswert begrenzt werden. Durch das Begrenzen der gemittelten Feedback-Spannung auf einen Minimalwert kann beeinflusst werden, wann der Leistungsschalter frühestens eingeschaltet wird. Mit anderen Worten kann auch auf diese Weise die Taktfrequenz nach oben begrenzt werden.

In einer noch weiteren Ausgestaltung der Erfindung werden die Rampenspannungskurve und/oder die gemittelte Feedback-Spannung moduliert. Durch Modulation der Rampenspannung oder der Feedback-Spannung kann ein Jitter in der Taktfrequenz erzeugt werden, um zum Beispiel Funkstörungen zu vermindern.

Die Gleichspannungswandler-Schaltungsanordnung ist beispielsweise als ein Sperrwandler, ein Aufwärtswandler oder ein Abwärtswandler ausgebildet.

Gemäß einem zweiten Aspekt betrifft die vorliegende Erfindung auch eine Gleichspannungswandler-Schaltungsanordnung, die eine Gleichrichteranordnung; eine Induktivität und wenigstens einen Leistungsschalter zum Schalten der Induktivität auf ihrer Eingangsseite; und eine Steuereinrichtung zum Ansteuern des Leistungsschalters zur Durchführung des oben beschriebenen Verfahrens der Erfindung umfasst.

Gemäß einem dritten Aspekt kann diese Gleichspannungswandler-Schaltungsanordnung in besonders vorteilhafter Weise in einer Photovoltaikanlage zur solargeneratorseitigen Energieversorgung eines Solarwechselrichters der Photovoltaikanlage verwendet werden.

Obige sowie weitere Merkmale, Vorteile und Anwendungsmöglichkeiten der Erfindung werden aus der nachfolgenden Beschreibung eines bevorzugten, nichteinschränkenden Ausführungsbeispiels unter Bezugnahme auf die beiliegenden Zeichnungen besser verständlich. Darin zeigen:
- Fig. 1: ein vereinfachtes Blockschaltbild zum Erläutern des Grundaufbaus eines Sperrwandlers, bei dem das erfindungsgemäße Verfahren verwendet werden kann;
- Fig. 2: ein Diagramm des zeitlichen Verlaufs der Spannungskurve am Leistungsschalter;
- Fig. 3: ein vereinfachtes Blockschaltbild des Aufbaus eines Sperrwandlers gemäß einem bevorzugten Ausführungsbeispiel der Erfindung; und
- Fig. 4: ein Spannungs-Zeit-Diagramm zur Erläuterung der Funktionsweise des erfindungsgemäßen Verfahrens.

Die Erfindung wird nachfolgend am Beispiel eines Sperrwandlers näher beschrieben. Das erfindungsgemäße Betriebs- bzw. Regelungsverfahren eignet sich aber ebenso für andere Gleichspannungswandler-Schaltungsanordnungen wie beispielsweise Aufwärtswandler und Abwärtswandler.

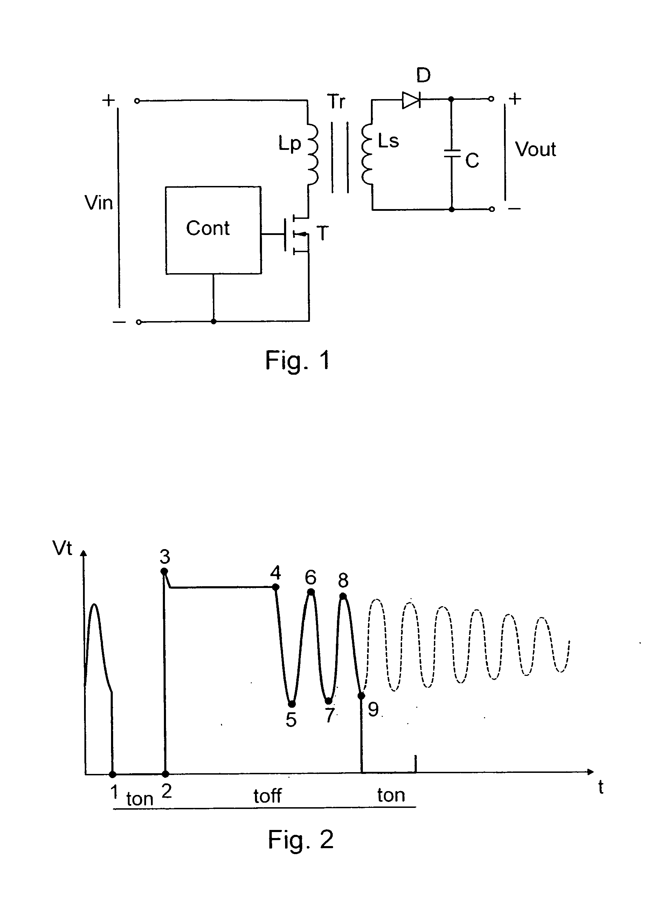

Wie in Fig. 1 dargestellt, umfasst der Sperrwandler grundsätzlich auf seiner Eingangsseite eine Induktivität Lp in Form einer Primärwicklung eines Transformators Tr und einen Leistungsschalter T zum Ein- und Ausschalten dieser Induktivität Lp. Als Leistungsschalter T kann zum Beispiel ein Transistor, speziell ein MOSFET eingesetzt werden. Auf der Ausgangsseite des Sperrwandlers umfasst dieser neben der Sekundärwicklung Ls des Transformators Tr eine Gleichrichteranordnung, bestehend aus einer Freilaufdiode D und einer Kapazität C.

Dieser Sperrwandler setzt in bekannter Weise eine Eingangsgleichspannung Vin in eine Ausgangsgleichspannung Vout um. Zur Reduzierung der Schaltverluste enthält die Schaltungsanordnung ferner eine Steuereinrichtung Cont, beispielsweise in Form eines Mikrocontrollers, welche den Leistungsschalter T in spezieller Weise ansteuert, wie nachfolgend beschrieben.

Beim Betrieb des in Fig. 1 gezeigten Sperrwandlers existiert am Leistungsschalter T ein Spannungsverlauf Vt, wie er beispielhaft in Fig. 2 dargestellt ist.

Zum Zeitpunkt 1 wird der Leistungsschalter T eingeschaltet, sodass die Primärwicklung Lp des Sperrwandlertransformators mit Energie geladen wird. Nach einer Einschaltzeit ton wird der Leistungsschalter T zum Zeitpunkt 2 ausgeschaltet. Der in der Primärwicklung Lp weiter fließende Strom lädt dann die Streukapazitäten des Leistungsschalters T und des Transformators Tr auf. Nachdem die Streukapazitäten aufgeladen sind, beginnt sich die im Transformator Tr gespeicherte Energie in die Sekundärseite zu entladen (Zeitpunkt 3).

Zum Zeitpunkt 4 hat sich die Energie im Transformator Tr vollständig in den Sekundärkreis des Sperrwandlers entladen. Danach ergibt sich eine schwach gedämpfte Schwingung, die durch die Streukapazitäten und die Induktivität des Transformators Tr bestimmt wird.

Zu den Zeitpunkten 4, 6, 8, ... erreicht die Spannung Vt am Leistungsschalter T jeweils ein Maximum. Würde der Leistungsschalter T hier eingeschaltet werden, so entstehen maximale Schaltverluste. Zu den Zeitpunkten 5, 7, 9, ... erreicht die Spannung Vt dagegen ein Minimum. Um die Schaltverluste im Sperrwandler zu minimieren, sollte der Leistungsschalter T zu diesen Zeitpunkten eingeschaltet werden. Als Nebeneffekt sinken dann auch die Störaussendungen des Sperrwandlers.

Da das erfindungsgemäße Regelungsverfahren des Sperrwandlers durch die Steuereinrichtung Cont auf dem herkömmlichen Variable Off Time ― Verfahren basiert, soll zunächst dieses kurz erläutert werden.

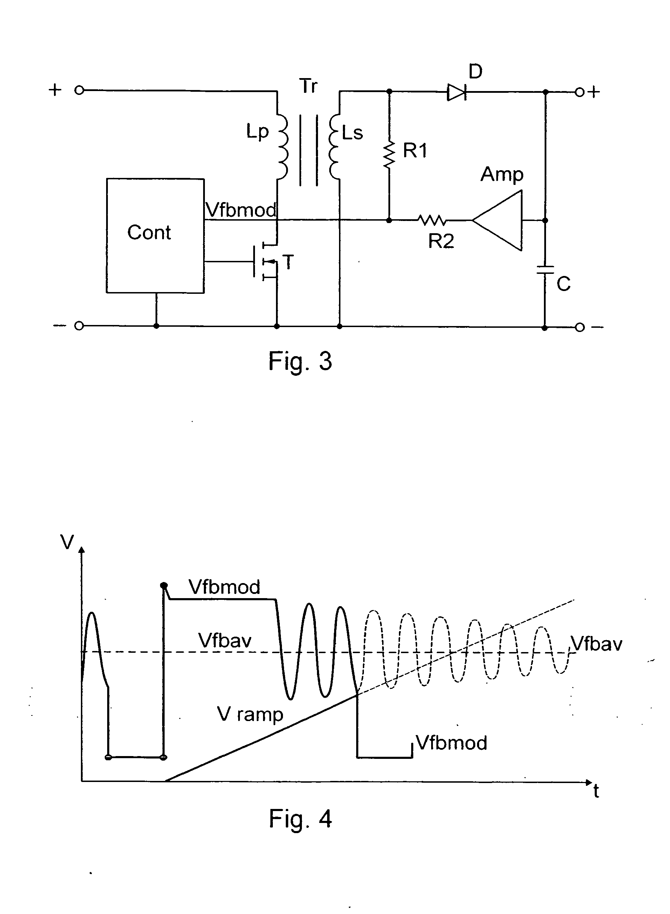

Zur Durchführung des Variable Off Time ― Regelungsverfahrens wird der Steuereinrichtung Cont zum Beispiel mittels eines Operationsverstärkers Amp die Differenz zwischen der Ausgangsspannung Vout des Sperrwandlers und einem Sollwert für diese Ausgangsspannung über einen Widerstand R2 als eine gemittelte Feedback-Spannung Vfbav zugeführt (vgl. Fig. 3). Außerdem erzeugt die Steuereinrichtung Cont mittels eines Rampengenerators eine monoton steigende Rampenspannungskurve Vramp bzw. wird ihr eine solche von einem externen Rampengenerator zugeführt.

Beim herkömmlichen Variable Off Time ― Verfahren vergleicht die Steuereinrichtung Cont die Rampenspannung Vramp mit der gemittelten Feedback-Spannung Vfbav. Sobald diese beiden Spannungswerte Vramp und Vfbav gleich groß werden, wird ein neuer Taktzyklus gestartet, d.h. der Leistungsschalter T eingeschaltet.

Bei sinkender Ausgangsleistung des Sperrwandlers wird die Ausschaltzeit toff des Leistungsschalters T vergrößert, um die übertragene Energie zu verringern und dadurch die Ausgangsspannung Vout konstant zu halten. Sinkt die Ausgangsleistung, so steigt zunächst die Ausgangsspannung Vout des Sperrwandlers etwas an. In der Folge steigt auch die gemittelte Feedback-Spannung Vfbav an. Damit verschiebt sich der Schnittpunkt zwischen der monoton steigenden Rampenspannungskurve Vramp und der konstanten Feedback-Spannungskurve Vfbav, d.h. der Zeitpunkt zum Einschalten des Leistungsschalters T in Fig. 2 nach rechts. Dies bedeutet wiederum, dass sich die Ausschaltzeit toff des Leistungsschalters T erhöht bzw. die Taktfrequenz verringert. Hierdurch sinkt die vom Sperrwandler übertragene Leistung und seine Ausgangsspannung Vout wird auf den Sollwert geregelt.

Aus Fig. 2 ist erkennbar, dass die Schaltverluste des Sperrwandlers variieren, je nachdem wie groß die Spannung Vt am Leistungsschalter T zum Zeitpunkt seines Einschaltens ist. Der Schnittpunkt zwischen den beiden Spannungskurven Vramp und Vfbav und damit der Einschaltzeitpunkt können günstig (Spannung Vt am Leistungsschalter T klein -> geringe Schaltverluste) oder ungünstig (Spannung Vt am Leistungsschalter T hoch -> große Schaltverluste) liegen.

Um zu erreichen, dass das Einschalten des Leistungsschalters T jeweils im Bereich der Spannungsminima von Vt erfolgt, wird das Variable Off Time ― Verfahren wie folgt modifiziert.

Wie in Fig. 3 dargestellt, wird der Sekundärwicklung Ls des Transformators Tr ein Abbild der Spannung Vt am Leistungsschalter T entnommen und über den Widerstand R1 auf das Ausgangssignal des Operationsverstärkers Amp, d.h. auf die gemittelte Feedback-Spannung Vfbav addiert und der Steuereinrichtung Cont als modifizierte Feedback-Spannung Vfbmod zugeführt. Diese modifizierte Feedback-Spannungskurve Vfbmod ist in Fig. 4 gemeinsam mit der Rampenspannungskurve Vramp und der gemittelten Feedback-Spannung Vfbav veranschaulicht.

Der Einschaltzeitpunkt des Leistungsschalters T wird nun als Schnittpunkt zwischen der monoton steigenden Rampenspannungskurve Vramp und der modifizierten Feedback-Spannungskurve Vfbmod bestimmt. Wie aus Fig. 4 ersichtlich, liegt dieser Schnittpunkt immer im Bereich eines Minimums der modifizierten Feedback-Spannungskurve Vfbmod und damit auch eines Minimums der Spannung Vt am Leistungsschalter T. Als Folge können auch die Schaltverluste beim Einschalten des Leistungsschalters T minimiert werden. Die Spannungskurve Vt am Leistungsschalter T zeigt zwar keine Nulldurchgänge, mit dem erfindungsgemäßen Regelungsverfahren können aber dennoch die Schaltverluste des Sperrwandlers minimiert werden.

Bei einer sich ändernden Ausgangsleistung des Sperrwandlers springt der Einschaltzeitpunkt von Minimum zu Minimum der Spannungskurve Vfbmod. Sofern die Ausgangsleistung nicht exakt zu einem konstanten Betrieb des Sperrwandlers mit einem bestimmten Minimum passt, wird automatisch ein beständiger Wechsel zwischen benachbarten Spannungsminima durchgeführt, sodass sich im Mittel die gewünschte Ausgangsleistung ergibt.

Mit diesem Regelungsverfahren ist ein Einschalten des Leistungsschalters T im Spannungsminimum sogar noch nach 20 und mehr Schwingperioden der Spannung Vt möglich.

Die Rampenspannungskurve Vramp muss monoton ansteigen, der Anstieg muss aber nicht notwendigerweise stetig oder linear erfolgen. Zum Beispiel kann der Anstieg auch zeitweise angehalten werden, sodass die Rampenspannung Vramp für eine gewisse Zeit auf einem konstanten Wert verharrt. Ferner kann die Rampenspannung Vramp zum Beispiel bei extrem niedriger Ausgangsleistung auch nach Erreichen eines Maximalwertes auf diesem verbleiben, bis die absinkende modifizierte Feedback-Spannung Vfbmod diese Rampenspannung Vramp erreicht.

Der Beginn der Rampenspannungskurve Vramp kann zu verschiedenen Zeitpunkten gewählt werden. In dem Ausführungsbeispiel von Fig. 4 beginnt die Rampenspannung Vramp beispielhaft zu einem Ausschaltzeitpunkt des Leistungsschalters T. Durch die Wahl des Startzeitpunkts der Rampenspannungskurve Vramp und das Begrenzen der gemittelten Feedback-Spannung Vfbav kann beeinflusst werden, wann der Leistungsschalter T frühestens eingeschaltet wird. Auf diese Weise kann somit die Taktfrequenz nach oben begrenzt werden.

Ferner kann durch Modulation der Rampenspannung oder der Feedback-Spannung ein Jitter in der Taktfrequenz des Leistungsschalters T erzeugt werden, um zum Beispiel Funkstörungen zu vermindern.

Während in dem obigen Ausführungsbeispiel von Fig. 3 und 4 die Spannung Vt am Leistungsschalter T auf die gemittelte Feedback-Spannung Vfbav addiert wurde, um die so erzeugte modifizierte Feedback-Spannung Vfbmod mit der Rampenspannungskurve Vramp zu vergleichen, besteht alternativ zum Beispiel auch die Möglichkeit, die Spannung Vt am Leistungsschalter T von der Rampenspannung Vramp zu subtrahieren, um die so erzeugte modifizierte Rampenspannung Vrampmod mit der gemittelten Feedback-Spannung Vfbav zu vergleichen.

## Patentansprüche

1. Verfahren zum Betreiben einer Gleichspannungswandler-Schaltungsanordnung, wobei die Schaltungsanordnung eine Gleichrichteranordnung (D, C) und auf ihrer Eingangsseite eine Induktivität (Lp) und wenigstens einen Leistungsschalter (T) zum Schalten der Induktivität (Lp) aufweist, wobei eine Ausschaltzeit (toff) des Leistungsschalters (T) in Abhängigkeit von der Ausgangsleistung der Schaltungsanordnung variabel verändert wird,
**dadurch gekennzeichnet, dass**
ein Einschalten des Leistungsschalters (T) jeweils im Bereich eines Minimums einer Spannungskurve (Vt) am Leistungsschalter (T) erfolgt.

2. Verfahren nach Anspruch 1,
**dadurch gekennzeichnet, dass**
der Einschaltzeitpunkt des Leistungsschalters (T) als Schnittpunkt zwischen einer monoton ansteigenden Rampenspannungskurve (Vramp) und einer modifizierten Feedback-Spannungskurve (Vfbmod) bestimmt wird, wobei die modifizierte Feedback-Spannungskurve (Vfbmod) durch Addieren der Spannungskurve (Vt) am Leistungsschalter (T) zu einer gemittelten Feedback-Spannung (Vfbav) erzeugt wird, und
die gemittelte Feedback-Spannung (Vfbav) durch eine Mittelung einer Differenz zwischen einer Ausgangsspannung (Vout) der Schaltungsanordnung und einem Sollwert der Ausgangsspannung der Schaltungsanordnung bestimmt wird.

3. Verfahren nach Anspruch 1,
**dadurch gekennzeichnet, dass**
der Einschaltzeitpunkt des Leistungsschalters (T) als Schnittpunkt zwischen einer modifizierten Rampenspannungskurve (Vrampmod) und einer gemittelten Feedback-Spannung (Vfbav) bestimmt wird, wobei die modifizierte Rampenspannungskurve (Vrampmod) durch Subtrahieren der Spannungskurve (Vt) am Leistungsschalter (T) von einer monoton ansteigenden Rampenspannungskurve (Vramp) erzeugt wird, und
die gemittelte Feedback-Spannung (Vfbav) durch eine Mittelung einer Differenz zwischen einer Ausgangsspannung (Vout) der Schaltungsanordnung und einem Sollwert der Ausgangsspannung der Schaltungsanordnung bestimmt wird.

4. Verfahren nach Anspruch 2 oder 3,
**dadurch gekennzeichnet, dass**
die Rampenspannungskurve (Vramp) zu einem Ausschaltzeitpunkt des Leistungsschalters (T) beginnt.

5. Verfahren nach einem der Ansprüche 2 bis 4,
**dadurch gekennzeichnet, dass**
die gemittelte Feedback-Spannung (Vfbav) und/oder die Rampenspannungskurve (Vramp) auf einen vorgegebenen Spannungswert begrenzt wird.

6. Verfahren nach einem der Ansprüche 2 bis 5,
**dadurch gekennzeichnet, dass**
die Rampenspannungskurve (Vramp) und/oder die gemittelte Feedback-Spannung (Vfbav) moduliert werden.

7. Verfahren nach einem der vorhergehenden Ansprüche,
**dadurch gekennzeichnet, dass**
die Gleichspannungswandler-Schaltungsanordnung als ein Sperrwandler, ein Aufwärtswandler oder ein Abwärtswandler ausgebildet ist.

8. Gleichspannungswandler-Schaltungsanordnung, mit
einer Gleichrichteranordnung (D, C);
einer Induktivität (Lp) und wenigstens einem Leistungsschalter (T) zum Schalten der Induktivität (Lp) auf ihrer Eingangsseite; und
einer Steuereinrichtung (Cont) zum Ansteuern des Leistungsschalters (T) zur Durchführung des Verfahrens nach einem der Ansprüche 1 bis 7.

9. Schaltungsanordnung nach Anspruch 8,
**dadurch gekennzeichnet, dass**
die Gleichspannungswandler-Schaltungsanordnung als ein Sperrwandler, ein Aufwärtswandler oder ein Abwärtswandler ausgebildet ist.

10. Verwendung der Gleichspannungswandler-Schaltungsanordnung nach Anspruch 8 oder 9 in einer Photovoltaikanlage zur solargeneratorseitigen Energieversorgung eines Solarwechselrichters der Photovoltaikanlage.
